# EUROPEAN PATENT APPLICATION

(11) **EP 4 607 646 A1**
(43) Date of publication of application: **27.08.2025**
(21) Application number: 23879920.9
(22) Date of filing: 14.04.2023
(51) Int. Cl.: H01M 10/0567, H01M 10/42, H01M 10/052

(54) **ADDITIVE FOR LITHIUM SECONDARY BATTERY, ELECTROLYTE FOR LITHIUM SECONDARY BATTERY INCLUDING SAME, AND LITHIUM SECONDARY BATTERY**

(30) Priority: 18.10.2022 KR 20220133892
(71) Applicant: SAMSUNG SDI CO., LTD., Yongin-si, Gyeonggi-do 17084 (KR)
(72) Inventor: RYU, Bokyung, Yongin-si, Gyeonggi-do 17084 (KR); WOO, Myungheui, Yongin-si, Gyeonggi-do 17084 (KR); KIM, Sanghoon, Yongin-si, Gyeonggi-do 17084 (KR)
(74) Representative: Gulde & Partner
(86) International application number: PCT/KR2023/005128
(87) International publication number: WO 2024/085334

(57) **Abstract**

Provided are an additive for a rechargeable lithium battery, an electrolyte a rechargeable lithium battery including the same, and a rechargeable lithium battery, the additive including a core, and a shell surrounding the core, wherein the core includes a flame retardant, a fire extinguishing agent, a non-combustible material, or a combination thereof, and the shell includes a polymer having a melting point of 90 °C to 120 °C.

## Description

### [Technical Field]

This disclosure relates to an additive for a rechargeable lithium battery, an electrolyte for a rechargeable lithium battery including the same, and a rechargeable lithium battery.

### [Background Art]

A rechargeable lithium battery may be recharged and has three or more times as high energy density per unit weight as a conventional lead storage battery, nickelcadmium battery, nickel hydrogen battery, nickel zinc battery and the like. It may be also charged at a high rate and thus, is commercially manufactured for a laptop, a cell phone, an electric tool, an electric bike, and the like, and researches on improvement of additional energy density have been actively made.

Such a rechargeable lithium battery is manufactured by injecting an electrolyte into a battery cell, which includes a positive electrode including a positive electrode active material capable of intercalating/deintercalating lithium ions and a negative electrode including a negative electrode active material capable of intercalating/deintercalating lithium ions.

Particularly, an electrolyte includes an organic solvent in which a lithium salt is dissolved and critically determines stability and performance of a rechargeable lithium battery.

LiPF₆ that is most commonly used as a lithium salt of an electrolyte has a problem of reacting with an electrolytic solvent to promote depletion of a solvent and generate a large amount of gas. When LiPF₆ decomposes, LiF and PFs are generated, which causes electrolyte depletion in the battery, resulting in deterioration of high-temperature performance and vulnerability to safety.

Accordingly, there is a demand for an electrolyte with improved safety without deteriorating performance even under high-temperature conditions.

### [Disclosure]

### [Technical Problem]

An embodiment provides an additive for a rechargeable lithium battery having improved thermal stability.

Another embodiment provides an electrolyte for a rechargeable lithium battery having improved cycle-life characteristics, high-temperature safety, and high-temperature reliability by applying the additive.

Another embodiment provides a rechargeable lithium battery including the electrolyte for the rechargeable lithium battery.

### [Technical Solution]

An additive for a rechargeable lithium battery according to an embodiment includes a core, and a shell surrounding the core, wherein the core includes a flame retardant, a fire extinguishing agent, a non-combustible material, or a combination thereof, the shell includes a polymer having a melting point of 90 °C to 120 °C.

A ratio of a thickness of the core to a thickness of the shell may be 1:1 to 4:1.

The core may have a thickness of 0.1 µm to 2.0 µm, and the shell may have a thickness of 0.025 µm to 0.5 µm.

The flame retardant may include a phosphoric acid ester compound, a phosphazene compound, or a combination thereof.

The phosphoric acid ester compound may include a compound represented by Chemical Formula 1.

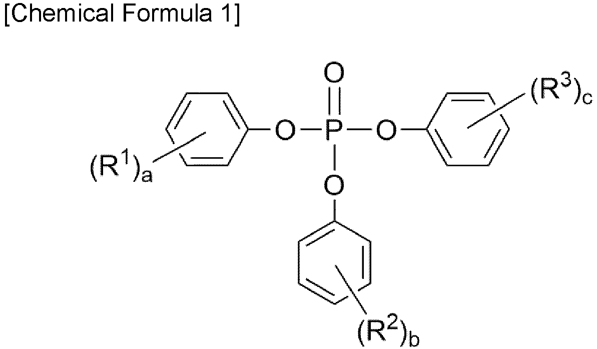

In Chemical Formula 1,
R¹ to R³ are each independently a substituted or unsubstituted C1 to C10 alkyl group, and
a to c are each independently an integer from 0 to 5.

The phosphazene compound may include a compound represented by Chemical Formula 2.

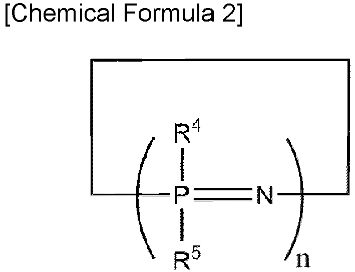

In Chemical Formula 2,
n is 3 or 4,
R⁴ and R⁵ are each independently -F, -NR^{x}R^{y}, or a substituted or unsubstituted C1 to C5 alkoxy group, wherein R^{×} and R^{y} are each independently a substituted or unsubstituted C1 to C30 alkyl group, a substituted or unsubstituted C3 to C30 cycloalkyl group, a substituted or unsubstituted C2 to C30 alkenyl group, or C6 to C30 substituted or unsubstituted aryl group.

The phosphazene compound may include a compound represented by Chemical Formula 2-1 or Chemical Formula 2-2.

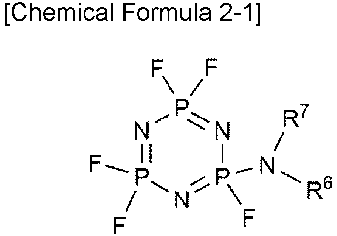

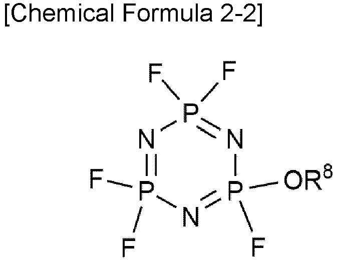

In Chemical Formula 2-1 and above Chemical Formula 2-2,
R⁶ to R⁸ are each independently hydrogen, a substituted or unsubstituted C1 to C10 alkyl group, a C1 to C10 fluoroalkyl group, or a combination thereof.

The polymer may include poly(vinylidene fluoride-hexafluoropropylene) (PVDF-HFP), polyacrylic acid, polyethylene, poly(methyl methacrylate), polyalkylene oxide, polyalkylene succinate, or a combination thereof.

The additive may be in a form of fibers formed using electrospinning.

According to another embodiment, an electrolyte for a rechargeable lithium battery includes a non-aqueous organic solvent, a lithium salt, and the aforementioned additive for a rechargeable lithium battery.

The additive for the rechargeable lithium battery may be included in an amount of 0.1 wt% to 20 wt%, 0.1 wt% to 15 wt%, or 0.1 wt% to 10 wt% based on a total weight of the electrolyte for the rechargeable lithium battery.

According to another embodiment, a rechargeable lithium battery includes a positive electrode including a positive electrode active material; a negative electrode including a negative electrode active material; and the aforementioned electrolyte.

### [Advantageous Effects]

The additive for the rechargeable lithium battery according to an embodiment has excellent electrolyte impregnation properties and can maintain battery characteristics without increasing battery resistance when applied to an electrolyte.

In addition, a rechargeable lithium battery including the additive for the rechargeable lithium battery according to an embodiment can control ignition of the battery above the battery operating temperature and improve the safety of the battery.

### [Description of the Drawings]

FIG. 1 is a cross-sectional view of an additive according to an embodiment.
FIG. 2 is a schematic view showing a rechargeable lithium battery according to an embodiment.

### <Description of Symbols>

100: rechargeable lithium battery
112: negative electrode
113: separator
114: positive electrode
120: battery container
140: sealing member

### [Best Mode]

Hereinafter, the embodiments will be described in detail so that those of ordinary skill in the art can easily implement them. However, the actually applied structure may be implemented in several different forms and is not limited to the embodiments described herein.

In the drawings, the thickness of layers, films, panels, regions, etc., are exaggerated for clarity.

It will be understood that when an element such as a layer, film, region, or substrate is referred to as being "on" another element, it can be directly on the other element or intervening elements may also be present. In contrast, when an element is referred to as being "directly on" another element, there are no intervening elements present.

In this specification, "at least one of A, B or C," "one of A, B, C or combinations thereof" and "one of A, B, C and combinations thereof" mean each individual component and all combinations thereof (e.g., A; B; A and B; A and C; B and C; or A, B, and C).

Hereinafter, the term "combination" includes a mixture of two or more, a mutual substitution, and a stacked structure of two or more.

In the present specification, when a specific definition is not provided, "substituted" refers to replacement of hydrogen in a compound by a substituent selected from deuterium, a halogen atom (F, Br, Cl, or I), a hydroxy group, a nitro group, a cyano group, an amino group, an azido group, an amidino group, a hydrazino group, a hydrazono group, a carbonyl group, a carbamyl group, a thiol group, an ester group, a carboxyl group or a salt thereof, a sulfonic acid group or a salt thereof, a phosphoric acid or a salt thereof, a C1 to C30 alkyl group, a C2 to C30 alkenyl group, a C2 to C30 alkynyl group, a C6 to C30 aryl group, a C7 to C30 arylalkyl group, a C1 to C30 alkoxy group, a C1 to C20 heteroalkyl group, a C3 to C20 heteroarylalkyl group, a C3 to C30 cycloalkyl group, a C3 to C15 cycloalkenyl group, a C6 to C15 cycloalkynyl group, a C2 to C30 heterocyclic group, and a combination thereof.

In addition, two adjacent groups among the substituted halogen atom (F, Br, Cl, or I), hydroxy group, nitro group, cyano group, amino group, azido group, amidino group, hydrazino group, hydrazono group, carbonyl group, carbamyl group, thiol group, ester group, carboxyl group or salt thereof, sulfonic acid group or salt thereof, phosphoric acid group or salt thereof, C1 to C30 alkyl group, C2 to C30 alkenyl group, C2 to C30 alkynyl group, C6 to C30 aryl group, C7 to C30 arylalkyl group, C1 to C30 alkoxy group, C1 to C20 heteroalkyl group, C3 to C20 heteroarylalkyl group, C3 to C30 cycloalkyl group, C3 to C15 cycloalkenyl group, C6 to C15 cycloalkynyl group, C2 to C30 heterocyclic group may also be fused with each other to form rings. For example, the substituted C6 to C30 aryl group may be fused with another adjacent substituted C6 to C30 aryl group to form a substituted or unsubstituted fluorene ring.

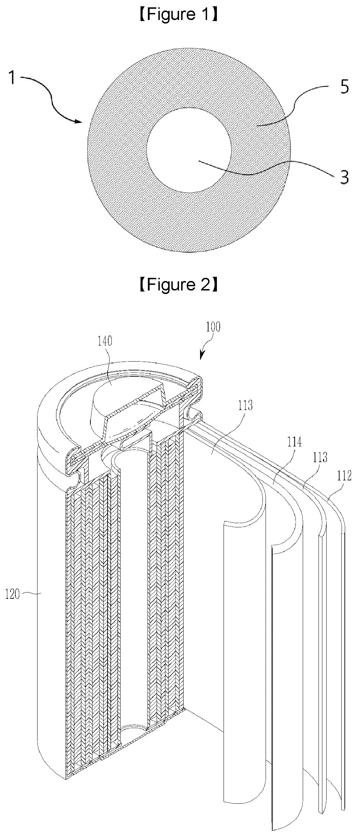

An additive for a rechargeable lithium battery according to an embodiment is described below with reference to FIG. 1.

FIG. 1 is a cross-sectional view of an additive according to an embodiment.

Referring to FIG. 1, an additive 1 according to an embodiment includes a core 3 and a shell 5 surrounding the core 3. The core 3 includes a flame retardant, a fire extinguishing agent, a non-combustible material, or a combination thereof and the shell 5 includes a polymer having a melting point of 90 °C to 120 °C.

Because the additive 1 has a structure including a core 3 and a shell 5, it can maintain battery characteristics without increasing the resistance of the battery compared to when a fire-preventing material such as a flame retardant is directly introduced into the battery. In addition, because the core 3 includes a safety-enhancing material such as a flame retardant, a fire extinguishing agent, or a non-flammable material, when the shell 5 of the additive melts at a high temperature, the material is released to the outside from the core 3 to control ignition of the battery, thereby improving the safety of the battery.

A ratio of the thickness of the core 3 to the thickness of the shell 5 may be 1:1 to 4:1, for example, 3:2, for example, 2:1, for example, 5:2, for example, 3:1, but is not limited thereto.

When the thickness ratio of the core 3 and shell 5 is within the above range, the time required for melting of the shell 5 and release of a core material may be adjusted to an appropriate range, and the occurrence of electrode short circuit at high temperature may be effectively controlled. **In** addition, when not in a high temperature state, the shell 5 is not easily broken, which prevents unnecessary increase in battery resistance and deterioration of battery characteristics.

When the additive including the core 3 and the shell 5 is in the form of fibers, the "thickness of the core" refers to a straight length of a line segment from the center of a circle, which is the cross-section of the fiber, to a point on the circumference of the core, and the "thickness of the shell" refers to a straight line length between the point where the line segment intersects the circumference of the core and the point where it intersects the circumference of the shell, when connecting a line segment from the center of a circle, which is a cross-section of a fiber, to a point on the circumference of the shell.

When the additive including the core 3 and the shell 5 is spherical, the "thickness of the core" refers to a length of a line segment from the center of the sphere to a point on the surface of the core, and the "thickness of the shell" refers to a length between the point where the line segment intersects the surface of the core and the point where it intersects the surface of the shell, when connecting a line segment from the center of the sphere to a point on the surface of the shell.

A thickness of the core 3 may be 0.1 µm to 2.0 µm, for example greater than or equal to 0.1 µm, greater than or equal to 0.15 µm, greater than or equal to 0.20 µm, greater than or equal to 0.25 µm, greater than or equal to 0.30 µm, or greater than or equal to 0.35 µm, and less than or equal to 2.0 µm, for example, less than or equal to 1.5 µm, less than or equal to 1.4 µm, less than or equal to 1.3 µm, less than or equal to 1.2 µm, less than or equal to 1.1 µm, or less than or equal to 1.0 µm, but is not limited thereto.

Because the core 3 has a thickness within the above range, the core material is released together with the melting of the shell 5 in a timely manner, thereby effectively controlling the occurrence of an electrode short circuit, while maintaining battery characteristics without lowering the electrolyte impregnation property and unnecessarily increasing the battery resistance.

**The** flame retardant included in the core 3 may be a compound having the property of controlling ignition of the battery by suppressing or alleviating combustion. Specifically, the flame retardant may be a phosphoric acid ester compound, a phosphazene compound, or a combination thereof.

For example, the phosphoric acid ester compound may include alkyl phosphate, aryl phosphate, alkyl phsophonate, aryl phsophonate or a combination thereof. For example, the phosphate ester compound may be trimethyl phosphate, triethyl phosphate, tributyl phosphate, triphenyl phosphate, tricresyl phosphate, trixylenyl phosphate, tris(2,2,2-trifluoroethyl) phosphate, or dimethyl(2-methoxyethoxy) methylphosphonate, and for example, trimethyl phosphate, triethyl phosphate, tributyl phosphate, or triphenyl phosphate, but is not limited thereto.

The phosphate ester compound may be represented by Chemical Formula 1.

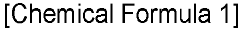

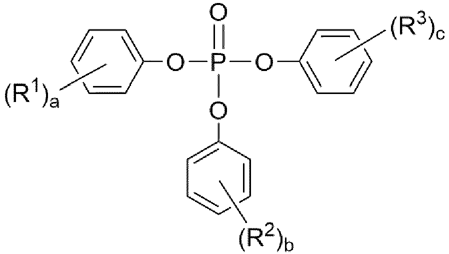

In Chemical Formula 1, R¹ to R³ are each independently a substituted or unsubstituted C1 to C10 alkyl group, and a to c are each independently an integer from 0 to 5.

The C1 to C10 alkyl group is, for example, a methyl group, an ethyl group, a propyl group, a butyl group, a pentyl group, a hexyl group, or a heptyl group, for example, a methyl group, an ethyl group, a propyl group, or a butyl group, for example, a methyl group, or an ethyl group, but is not limited thereto.

The a to c are each independently an integer from 0 to 5, an integer from 0 to 3, 0 or 1, but are not limited thereto.

The phosphazene compound may be represented by Chemical Formula 2.

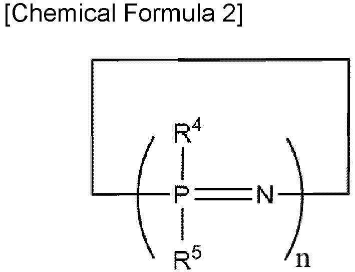

In Chemical Formula 2, n is 3 or 4, and R⁴ and R⁵ are the same or different and are -F, -NR^{x}R^{y}, or a substituted or unsubstituted C1 to C5 alkoxy group, wherein R^{x} and R^{y} are the same or different and are a substituted or unsubstituted C1 to C30 alkyl group, a substituted or unsubstituted C3 to C30 cycloalkyl group, a substituted or unsubstituted C2 to C30 alkenyl group, or C6 to C30 substituted or unsubstituted aryl group.

The phosphazene compound may be represented by Chemical Formula 2-1 or Chemical Formula 2-2.

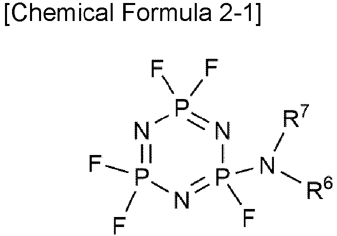

In Chemical Formula 2-1, R⁶ and R⁷ are each independently hydrogen, a substituted or unsubstituted C1 to C10 alkyl group, a C1 to C10 fluoroalkyl group, or a combination thereof. The C1 to C10 alkyl group is, for example, a methyl group, an ethyl group, a propyl group, a butyl group, a pentyl group, a hexyl group, or a heptyl group, for example, a methyl group, an ethyl group, a propyl group, or a butyl group, for example, a methyl group, or an ethyl group, but is not limited thereto.

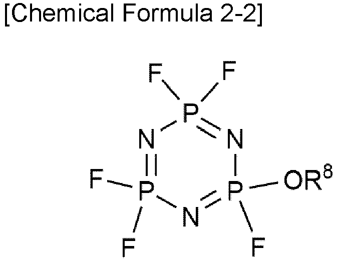

In Chemical Formula 2-2,
R⁸ is each independently hydrogen, a substituted or unsubstituted C1 to C10 alkyl group, a C1 to C10 fluoroalkyl group, or a combination thereof, for example, a methyl group, an ethyl group, a propyl group, or a butyl group, for example, a methyl group, or an ethyl group, but is not limited thereto.

The fire extinguishing agent included in the core 3 is a material used to put out a fire, and may be a compound having the property of preventing combustion of the battery. Examples include sodium bicarbonate, or carbon tetrachloride, but are not limited thereto.

The non-combustible material included in the core 3 is a material that is difficult to combust, and a compound having the property of preventing the spread of fire can be used. Examples include stone, glass, steel, aluminum, etc., but are not limited thereto

A thickness of the shell 5 may be 0.025 µm to 0.5 µm, for example greater than or equal to 0.025 µm, greater than or equal to 0.05 µm, greater than or equal to 0.075 µm, greater than or equal to 0.10 µm, greater than or equal to 0.125 µm, or greater than or equal to 0.15 µm, and less than or equal to 0.5 µm, for example, less than or equal to 0.45 µm, less than or equal to 0.40 µm, less than or equal to 0.35 µm, or less than or equal to 0.30 µm, but is not limited thereto.

Because the shell 5 has a thickness within the above range, the occurrence of an electrode short may be effectively controlled by melting of the shell 5 and release of the core material in a timely manner, while maintaining battery characteristics by not unnecessarily increasing battery resistance.

**In** an embodiment, the shell 5 may include a polymer having a melting point of 90 °C to 120°C, and for example, the melting point of the polymer may be greater than or equal to 90 °C, for example greater than or equal to 95 °C, for example greater than or equal to 100 °C and for example, the melting point of the polymer may be less than or equal to 120 °C, for example less than or equal to 115 °C, for example less than or equal to 110°C. For example, the polymer may be a thermoplastic resin.

Because the melting point of the polymer included in the shell 5 is within the above range, the shell 5 is stably maintained in the operating temperature range during charging and discharging of the battery, so as not to increase the resistance of the battery, and the shell 5 may be appropriately melted at a high temperature of 100 °C or higher. In addition, the safety-enhancing material such as the flame retardant in the core 3 may be released in a timely manner to effectively control ignition of the battery.

For example, the thermoplastic resin may be poly(vinylidene fluoride-hexafluoropropylene) (PVDF-HFP), polyacrylic acid, polyethylene, poly(methyl methacrylate)), a polyalkylene oxide, a polyalkylene succinate, or a combination thereof, and for example, poly(vinylidene fluoride-hexafluoropropylene) (PVDF-HFP), a polyalkylene oxide, a polyalkylene succinate, or a combination thereof, but is not limited thereto.

The polyalkylene oxide may be polyethylene oxide, polypropylene oxide, polybutylene oxide, polypentylene oxide, polyhexylene oxide, polyheptylene oxide, etc., and may be, for example, polyethylene oxide, polypropylene oxide, or polybutylene oxide, and may be, for example, polyethylene oxide, polypropylene oxide, etc., but is not limited thereto.

The polyalkylene succinate may be polyethylene succinate, polypropylene succinate, polybutylene succinate, polypentylene succinate, polyhexylene succinate, polyheptylene succinate, or polyoxylene succinate, and may be, for example, polyethylene succinate, polypropylene succinate, or polybutylene succinate, and may be, for example, polybutylene succinate, but is not limited thereto.

The additive 1 may be in the form of a fiber, i.e., a fiber, formed using electrospinning. When the additive is in the form of fiber, the core material may be effectively released at high temperatures, effectively controlling battery ignition. In addition to the form of the fiber, the additive 1 may have a structure including a core 3 and a shell 5 surrounding the core 3, and may be in the form of an irregular, plate-shaped, spherical, etc., but is not limited thereto.

When preparing an additive 1 having a core-shell structure, the electrospinning process may be performed by a known process considering the melting temperature of the safety-enhancing material such as flame retardant and the thermoplastic resin.

The additive 1 may be included in an amount of 0.1 wt% to 20 wt%, 0.1 wt% to 15 wt%, or 0.1 wt% to 10 wt% based on a total weight of the electrolyte for a rechargeable lithium battery. For example, the additive may be included in an amount of greater than or equal to 0.1 wt%, for example, greater than or equal to 0.2 wt%, greater than or equal to 0.3 wt%, greater than or equal to 0,4 wt%, greater than or equal to 0.5 wt%, greater than or equal to 0.6 wt%, greater than or equal to 0,7 wt%, greater than or equal to 0.8 wt%, greater than or equal to 0.9 wt%, or greater than or equal to 1 wt% and less than or equal to 15.0 wt%, for example, less than or equal to 14.0 wt%, less than or equal to 13.0 wt%, less than or equal to 12.0 wt%, less than or equal to 11.0 wt%, less than or equal to 10.0 wt%, or less than or equal to 9.0 wt% based on a total weight of the electrolyte for a rechargeable lithium battery, but is not limited thereto.

When the content of the additive 1 is within the above range, the battery characteristics are maintained without an increase in battery resistance at the battery operating temperature, and the battery resistance is increased above the battery operating temperature, thereby implementing a rechargeable lithium battery with improved safety.

The non-aqueous organic solvent serves as a medium for transmitting ions taking part in the electrochemical reaction of a battery.

The non-aqueous organic solvent may be a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, t-butyl acetate, methylpropionate, ethylpropionate, propylpropionate, decanolide, mevalonolactone, caprolactone, and the like. The ether-based solvent may include dibutyl ether, tetraglyme, diglyme, dimethoxyethane, 2-methyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a hydrocarbon group having a C2 to C20 linear, branched, or cyclic structure and may include a double bond, an aromatic ring, or an ether bond), and the like, dioxolanes such as 1,3-dioxolane and the like, sulfolanes, and the like.

The non-aqueous organic solvents may be used alone or in combination of one or more, and when using one or more in combination, the mixing ratio may be appropriately adjusted depending on the desired battery performance, which is widely understood by those working in the relevant field.

The carbonate-based solvent is prepared by mixing a cyclic carbonate and a linear carbonate. When the cyclic carbonate and linear carbonate are mixed together in a volume ratio of 1:1 to 9:1, an electrolyte performance may be improved.

The non-aqueous organic solvent may further include an aromatic hydrocarbon-based organic solvent in addition to the carbonate-based solvent. Herein, the carbonate-based solvent and the aromatic hydrocarbon-based organic solvent may be mixed in a volume ratio of 1:1 to 30:1.

The aromatic hydrocarbon-based organic solvent may be an aromatic hydrocarbon-based compound of Chemical Formula 4.

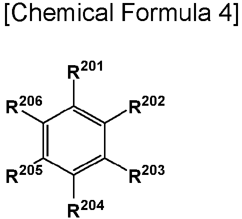

In Chemical Formula 4, R²⁰¹ to R²⁰⁶ are the same or different and are selected from hydrogen, a halogen, a C1 to C10 alkyl group, a haloalkyl group, or a combination thereof.

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include vinylene carbonate, vinyl ethylene carbonate, or an ethylene carbonate compound of Chemical Formula 5 as a cycle-life enhancing additive to improve the battery cycle-life.

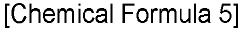

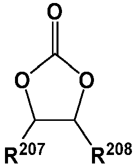

In Chemical Formula 5, R²⁰⁷ and R²⁰⁸ are the same as or different from each other and may be selected from hydrogen, a halogen group, a cyano group (CN), a nitro group (NO₂), or a fluorinated alkyl group having 1 to 5 carbon atoms.

Examples of the ethylene-based carbonate-based compound may include difluoroethylene carbonate, chloroethylene carbonate, dichloroethylene carbonate, bromoethylene carbonate, dibromoethylene carbonate, nitroethylene carbonate, cyanoethylene carbonate, or fluoroethylene carbonate. The amount of the cycle-life enhancing additive may be used within an appropriate range.

The lithium salt dissolved in the non-aqueous organic solvent supplies lithium ions in a battery, enables a basic operation of a rechargeable lithium battery, and improves transportation of the lithium ions between positive and negative electrodes.

Examples of the lithium salt include at least one selected from LiPF₆, LiBF₄, LiDFOP, LiDFOB, LiPO₂F₂, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide: LiFSI), LiC₄F₉SO₃, LiClO₄, LiAlO₂, LiAlCl₄, LiN(CₓF₂ₓ₊₁SO₂)(C_{y}F_{2y+1}SO₂), (wherein, x and y are natural numbers, for example, integers from 1 to 20), LiCl, Lil, or LiB(C₂O₄)₂ (lithium bis(oxalato) borate: LiBOB).

The lithium salt may be used in a concentration ranging from 0.1 M to 2.0 M. If the lithium salt is included at the above concentration range, an electrolyte may have excellent performance and lithium ion mobility due to optimal electrolyte conductivity and viscosity.

The additive and electrolyte may be applied to a rechargeable lithium battery.

Hereinafter, a rechargeable lithium battery according to an embodiment is described with reference to FIG. 2.

A rechargeable lithium battery 100 according to an embodiment includes a positive electrode 114 including a positive electrode active material; a negative electrode 112 including a negative electrode active material; and the aforementioned electrolyte.

A rechargeable lithium battery may be classified into a lithium ion battery, a lithium ion polymer battery, and a lithium polymer battery depending on kinds of a separator and an electrolyte. **It** also may be classified to be cylindrical, prismatic, coin-type, pouch-type, and the like depending on shape. **In** addition, it may be bulk type and thin film type depending on sizes. Structures and manufacturing methods for these batteries pertaining to this art are well known in the art.

Here, a cylindrical rechargeable lithium battery is exemplarily described as an example of a rechargeable lithium battery. FIG. 2 is a schematic view showing a rechargeable lithium battery according to an embodiment. Referring to FIG. 2, the rechargeable lithium battery 100 includes a battery cell including a positive electrode 114, a negative electrode 112 opposite the positive electrode 114, and a separator 113 between the positive electrode 114 and the negative electrode 112, and an electrolyte for a rechargeable lithium battery (not shown) impregnating the positive electrode 114, the negative electrode 112, and the separator 113, a battery container 120 housing the battery cell, and a sealing member 140 that seals the battery container 120. The positive electrode includes a positive electrode current collector and a positive electrode active material layer on the positive electrode current collector, wherein the positive electrode active material layer includes a positive electrode active material.

The positive electrode active material may include a compound capable of intercalating and deintercalating lithium (lithiated intercalation compound). Specifically, at least one of a composite oxide of lithium and a metal including cobalt, manganese, nickel or a combination thereof may be used.

A portion of the metal of the composite oxide may be replaced with a metal other than another metal, and the composite oxide may be at least one selected from a phosphate compound, for example, LiFePO₄, LiCoPO₄, or LiMnPO₄, and a composite oxide having a coating layer on the surface thereof may also be used, or a composite oxide and a composite oxide having a coating layer may be mixed and used. The coating layer may include at least one coating element compound selected from an oxide of a coating element, a hydroxide of a coating element, an oxyhydroxide of a coating element, an oxycarbonate of a coating element, and a hydroxy carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive electrode active material by using these elements in the compound. For example, the method may include any coating method (e.g., spray coating, dipping, etc.), but is not illustrated in more detail since it is well-known to those skilled in the related field.

The positive electrode active material may be, for example, at least one of lithium composite oxides represented by Chemical Formula 3.

[Chemical Formula 3] LiₓM¹_{y}M²_{z}M3_{1-y-z}O₂

In Chemical Formula 3,
0.5≤x≤1.8, 0<y≤1, 0≤z≤1, 0≤y+z≤1, and M¹, M², and M³ may each independently be selected from Ni, Co, Mn, Al, Sr, Mg or La, and the like metal, and a combination thereof.

In an embodiment, the positive electrode active material may be at least one selected from LiCoO₂, LiNiO₂, LiMnO₂, LiMn₂O₄, LiNiₐMn_{b}Co_{c}O₂ (a+b+c=1), LiNiₐMn_{b}Co_{c}Al_{d}O₂ (a+b+c+d=1), and LiNiₑCo_{f}Al_{g}O₂ (e+f+g=1).

For example, the positive electrode active material selected from LiNiₐMn_{b}Co_{c}O₂ (a+b+c=1), LiNiₐMn_{b}Co_{c}Al_{d}O₂ (a+b+c+d=1) and LiNiₑCo_{f}Al_{g}O₂ (e+f+g=1) may be a high nickel (high Ni)-based positive electrode active material.

For example, in the case of the LiNiₐMn_{b}Co_{c}O₂ (a+b+c=1) and LiNiₐMn_{b}Co_{c}Al_{d}O₂ (a+b+c+d=1), the nickel content may be 60% or more (a ≥ 0.6), and more specifically, 80% or more (a ≥ 0.8).

For example, in the case of the LiNiₑCo_{f}Al_{g}O₂ (e+f+g=1), the nickel content can be 60% or more (e ≥ 0.6), and more specifically, 80% or more (e ≥ 0.8).

The positive electrode active material may be included in an amount of 90 wt% to 98 wt% based on a total weight of the positive electrode active material layer.

The positive electrode active material layer may optionally include a conductive material and a binder. At this time, a content of the conductive material and the binder may be 1.0 wt% to 5.0 wt%, respectively, based on the total weight of the positive electrode active material layer.

The conductive material is used to provide conductivity to the positive electrode and any electrically conductive material may be used as a conductive material unless it causes a chemical change and examples of the conductive material may include a carbon-based material such as natural graphite, artificial graphite, carbon black, acetylene black, ketjen black, a carbon fiber, and the like; a metal-based material of a metal powder or a metal fiber including copper, nickel, aluminum silver, and the like; a conductive polymer such as a polyphenylene derivative; or a mixture thereof.

The binder improves binding properties of positive electrode active material particles with one another and with a current collector. Examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

Al may be used as the positive electrode current collector, but is not limited thereto.

The negative electrode includes a negative electrode current collector and a negative electrode active material layer including a negative electrode active material formed on the negative electrode current collector.

The negative electrode active material may include a material that reversibly intercalates/deintercalates lithium ions, lithium metal, lithium metal alloy, material being capable of doping/dedoping lithium, or a transition metal oxide.

The material that reversibly intercalates/deintercalates lithium ions may include a carbon material. The carbon material may be any generally-used carbon-based negative electrode active material in a rechargeable lithium battery and examples thereof may be crystalline carbon, amorphous carbon, or a mixture thereof. The crystalline carbon may be non-shaped, or sheet, flake, spherical, or fiber shaped natural graphite or artificial graphite. The amorphous carbon may be a soft carbon, a hard carbon, a mesophase pitch carbonization product, fired coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be Si, a Si-C composite, SiOₓ (0 < x < 2), a Si-Q alloy wherein Q is an element selected from an alkali metal, an alkaline-earth metal, a Group 13 element, a Group 14 element, a Group 15 element, a Group 16 element, a transition metal, a rare earth element, and a combination thereof, and not Si), Sn, SnO₂, a Sn-R alloy (wherein R is an element selected from an alkali metal, an alkaline-earth metal, a Group 13 element, a Group 14 element, a Group 15 element, a Group 16 element, a transition metal, a rare earth element, and a combination thereof , and not Sn), and the like. At least one of these materials may be mixed with SiO₂.

The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

The transition metal oxide may be vanadium oxide, lithium vanadium oxide, or lithium titanium oxide.

In a specific embodiment, the negative electrode active material may be a SiC composite including a Si-based active material and a carbon-based active material.

An average particle diameter of the Si-based active material in the Si-C composite may be 50 nm to 200 nm. When the average particle diameter of the Si-based active material is within the above range, volume expansion occurring during charging and discharging may be suppressed, and a break in a conductive path due to particle crushing during charging and discharging may be prevented.

The Si-based active material may be included in an amount of 1 to 60 wt%, for example, 3 to 60 wt% based on the total weight of the Si-C composite.

In another specific embodiment, the negative electrode active material may further include crystalline carbon together with the aforementioned Si-C composite.

When the negative electrode active material includes both a Si-C composite and crystalline carbon, the Si-C composite and the crystalline carbon may be included in the form of a mixture, and the Si-C composite and the crystalline carbon may be included in a weight ratio of 1:99 to 50:50. More specifically, the Si-C composite and crystalline carbon may be included in a weight ratio of 5:95 to 20:80.

The crystalline carbon may include, for example, graphite, and more specifically, natural graphite, artificial graphite, or a mixture thereof.

An average particle diameter of the crystalline carbon may be 5 µm to 30 µm.

**In** the present specification, the average particle diameter may be a particle size (D50) at 50 volume% in a cumulative size-distribution curve.

The Si-C composite may further include a shell surrounding a surface of the SiC composite, and the shell may include amorphous carbon. The amorphous carbon may include soft carbon, hard carbon, mesophase pitch carbonized product, calcined coke, or a mixture thereof.

The amorphous carbon may be included in an amount of 1 to 50 parts by weight, for example, 5 to 50 parts by weight, or 10 to 50 parts by weight, based on 100 parts by weight of the carbon-based active material.

In the negative electrode active material layer, the negative electrode active material may be included in an amount of 95 wt% to 99 wt% based on the total weight of the negative electrode active material layer.

In an embodiment, the negative electrode active material layer includes a binder, and optionally a conductive material. In the negative electrode active material layer, a content of the binder may be 1 wt% to 5 wt% based on a total weight of the negative electrode active material layer. When the negative electrode active material layer further includes a conductive material, the negative electrode active material layer includes 90 wt% to 98 wt% of the negative electrode active material, 1 wt% to 5 wt% of the binder, and 1 wt% to 5 wt% of the conductive material.

The binder improves binding properties of negative electrode active material particles with one another and with a current collector. The binder includes a non-water-soluble binder, a water-soluble binder, or a combination thereof.

The non-water-soluble binder may be selected from polyvinylchloride, carboxylated polyvinylchloride, polyvinylfluoride, polyurethane, polytetrafluoroethylene, polyvinylidene fluoride, polyethylene, polypropylene, polyamideimide, polyimide, or a combination thereof.

The water-soluble binder may be a rubber-based binder or a polymer resin binder. The rubber-based binder may be selected from a styrene-butadiene rubber, an acrylated styrene-butadiene rubber (SBR), an acrylonitrile-butadiene rubber, an acrylic rubber, a butyl rubber, a fluorine rubber, and a combination thereof. The polymer resin binder may be selected from polytetrafluoroethylene, an ethylene propylene copolymer, polyethyleneoxide, polyvinylpyrrolidone, polyepichlorohydrin, polyphosphazene, polyacrylonitrile, polystyrene, an ethylene propylene diene copolymer, polyvinylpyridine, chlorosulfonated polyethylene, latex, a polyester resin, an acrylic resin, a phenolic resin, an epoxy resin, polyvinyl alcohol, and a combination thereof.

When the water-soluble binder is used as a negative electrode binder, a cellulose-based compound may be further used to provide viscosity as a thickener. The cellulose-based compound includes one or more of carboxymethyl cellulose, hydroxypropylmethyl cellulose, methyl cellulose, or alkali metal salts thereof. The alkali metals may be Na, K, or Li. Such a thickener may be included in an amount of 0.1 to 3 parts by weight based on 100 parts by weight of the negative electrode active material.

The conductive material is included to provide electrode conductivity and any electronically conductive material may be used as a conductive material unless it causes a chemical change in a battery. Examples of the conductive material include a carbon-based material such as natural graphite, artificial graphite, carbon black, acetylene black, ketjen black, a carbon fiber, and the like; a metal-based material of a metal powder or a metal fiber including copper, nickel, aluminum silver, and the like; a conductive polymer such as a polyphenylene derivative; or a mixture thereof.

The negative electrode current collector may include one selected from a copper foil, a nickel foil, a stainless steel foil, a titanium foil, a nickel foam, a copper foam, a polymer substrate coated with a conductive metal, and a combination thereof.

The rechargeable lithium battery may further include a separator between the negative electrode and the positive electrode, depending on a type of the battery. The separator may be a porous substrate; or composite porous substrates.

The porous substrate is a substrate that includes a pore through which lithium ions can move. The porous substrate may include for example polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

The composite porous substrate may have a form including a porous substrate and a functional layer on the porous substrate. The functional layer may be, for example, at least one of a heat-resistant layer and an adhesive layer from the viewpoint of enabling additional function. For example, the heat-resistant layer may include a heat-resistant resin and optionally a filler. In addition, the adhesive layer may include an adhesive resin and optionally a filler. The filler may be an organic filler or an inorganic filler.

The additive for a rechargeable lithium battery according to an embodiment may be included in the electrolyte as described above, and can also be applied to a current collector, electrode tab, separator, etc. of a rechargeable lithium battery.

When the additive is applied to the current collector or the electrode tab, the additive may be coated on the uncoated region of the current collector or the electrode tab using a coating solution dispersed in an appropriate solvent. When the additive is applied to a separator, the additive may be included in the separator component, or a coating solution in which the additive is dispersed in an appropriate solvent may be coated on at least one surface of the separator.

### [Mode for Invention]

Hereinafter, the present disclosure is illustrated in more detail with reference to examples. However, these examples are exemplary, and the present disclosure is not limited thereto.

### Preparation of Additives

### Synthesis Example 1

An additive was prepared by preparing polymer solutions respectively including 5 wt% of a flame retardant (triphenyl phosphate) and 10 wt% of poly(vinylidenefluoride hexafluoropropylene) (PVDF-HFP) and then, electrospinning them to have a thickness ratio between core and shell of 1:1.

### Synthesis Example 2

An additive was prepared by preparing polymer solutions respectively including 10 wt% of a flame retardant (triphenyl phosphate) and 10 wt% of poly(vinylidenefluoride hexafluoropropylene) (PVDF-HFP) and then, electrospinning them to have a thickness ratio between core and shell of 1:1.

### Synthesis Example 3

An additive was prepared by preparing polymer solutions respectively including 10 wt% of a flame retardant (triphenyl phosphate) and 10 wt% of poly(vinylidenefluoride hexafluoropropylene) (PVDF-HFP) and then, electrospinning them to have a thickness ratio between core and shell of 4:1.

### Comparative Synthesis Example 1

A fiber-shaped additive was manufactured in the same manner as in Synthesis Example 1 except that a polymer solution including polyethylene glycol (PEG) instead of the poly(vinylidenefluoride-hexafluoropropylene) (PVDF-HFP) was used.

### Comparative Synthesis Example 2

A fiber-shaped additive was manufactured in the same manner as in Synthesis Example 1 except that a polymer solution including polypropylene (PP) instead of the poly(vinylidenefluoride-hexafluoropropylene) (PVDF-HFP) was used.

### Manufacturing of Rechargeable Lithium Battery Cell

### Example 1

Positive electrode active material slurry was prepared by using LiNi_{0.88}Co_{0.07}Al_{0.05}O₂ as a positive electrode active material, polyvinylidene fluoride as a binder, and ketjen black as a conductive material in a weight ratio of 96:2:2 and dispersing the mixture in N-methyl pyrrolidone.

The positive electrode active material slurry was coated on a 14 µm-thick Al foil, dried at 110 °C, and pressed to manufacture a positive electrode.

A negative electrode active material was prepared by mixing artificial graphite and an Si-C composite in a weight ratio of 93:7, and then the negative electrode active material, a styrene-butadiene rubber binder as a binder, and carboxylmethyl cellulose as a thickener were mixed in a weight ratio of 97:1:2 and then, dispersed in distilled water to prepare a negative electrode active material slurry.

The Si-C composite was in a form of a core including artificial graphite and silicon particles and a coal-based pitch coated on the surface of the core.

The negative electrode active material slurry was coated on a 10 µm-thick Cu foil, dried at 100 °C, and pressed to manufacture a negative electrode.

An electrode assembly was manufactured by assembling the manufactured positive and negative electrodes, and a separator made of polyethylene having a thickness of 25 µm, and an electrolyte was injected to manufacture a rechargeable lithium battery cell, and a composition of the electrolyte was as follows.

### (Composition of the Electrolyte)

Salt: 1.3 M LiPF₆
Solvent: ethylene carbonate (EC): propylene carbonate (PC): ethyl propionate (EP): propyl propionate (PP) = 15:15:25:45 (volume ratio)
Additive: 3 parts by weight of fluoroethylene carbonate, 3 parts by weight of SN, and 15 parts by weight of the additive prepared in Synthesis Example 1
(In the composition of the electrolyte, "parts by weight" means the relative weight of the additive based on 100 weight of the total electrolyte (lithium salt+non-aqueous organic solvent.)

### Example 2

A rechargeable lithium battery cell was manufactured in the same manner as in Example 1 except that 20 parts by weight of the additive according to Synthesis Example 2 was used instead of the additive according to Synthesis Example 1.

### Example 3

A rechargeable lithium battery cell was manufactured in the same manner as in Example 1 except that 10.25 parts by weight of the additive according to Synthesis Example 3 was used instead of the additive according to Synthesis Example 1.

### Comparative Example 1

A rechargeable lithium battery cell was manufactured in the same manner as in Example 1 except that the additive according to Synthesis Example 1 was not used.

### Comparative Example 2

A rechargeable lithium battery cell was manufactured in the same manner as in Example 1 except that 2 parts by weight of a flame retardant (triphenyl phosphate; Sigma-Aldrich Co., Ltd.) was used instead of the additive according to Synthesis Example 1.

### Comparative Example 3

A rechargeable lithium battery cell was manufactured in the same manner as in Example 1 except that 10 parts by weight of the flame retardant was used instead of the additive according to Synthesis Example 1.

### Comparative Example 4

A rechargeable lithium battery cell was manufactured in the same manner as in Example 1 except that the additive according to Comparative Synthesis Example 1 was used instead of the additive according to Synthesis Example 1.

### Comparative Example 5

A rechargeable lithium battery cell was manufactured in the same manner as in Example 1 except that the additive according to Comparative Synthesis Example 2 was used instead of the additive according to Synthesis Example 1.

### Evaluation 1: High-temperature Cycle-life Evaluation

The rechargeable lithium battery cells according to Examples 1 to 3 and

Comparative Examples 1 to 5 were constant current-charged to a voltage of 4.4 V at a current rate of 0.5 C and subsequently, cut off at a current rate of 0.05 C in the constant voltage mode of 4.4 V at 45 °C. Subsequently, the cells were discharged to a voltage of 3.0 V at the constant current rate of 0.5 C. This process was 100 times repeated. The charging and discharging experiment results were used to calculate a capacity retention rate at the 100^{th} cycle according to Calculation Equation 1, which was shown in Table 1. Capacity retention rate at 100th cycle [%] = [Discharge capacity at 50th cycle / Discharge capacity at 1st cycle] X 100

**[Table 1]**

| | High-temperature cycle-life (45 °C, 100^{th} cycle) (%) |
|---|---|
| Example 1 | 82.3 |
| Example 2 | 84.7 |
| Example 3 | 80.1 |
| Comparative Example 3 | 47.3 |
| Comparative Example 4 | 46.9 |
| Comparative Example 5 | 79.9 |

Referring to Table 1, the rechargeable lithium battery cells according to Examples 1 to 3, compared with the rechargeable lithium battery cells according to Comparative Examples 3 to 5, exhibited excellent high temperature cycle-life.

### Evaluation 2: Penetration Safety Evaluation

The rechargeable lithium battery cells according to Examples 1 to 3 and Comparative Examples 1 to 5 were charged under conditions of 0.5 C /4.4 V and cutoff at 0.05 C and then paused for 10 minutes to evaluate penetration stability by completely penetrating a center thereof at each speed of 50 mm/sec, 100 mm/sec, 150 mm/sec, and 200 mm/sec with a pin with a diameter of 5 mm, and the results are shown in Table 1.

**[Table 2]**

| | Penetration speed (mm/s) | | | | | | | |
|---|---|---|---|---|---|---|---|---|
| | 50 | | 100 | | 150 | | 200 | |
| | 1st | 2nd | 1st | 2nd | 1st | 2nd | 1st | 2nd |
| Example 1 | OK | OK | OK | OK | OK | OK | OK | OK |
| Example 2 | OK | OK | OK | OK | OK | OK | OK | OK |
| Example 3 | OK | OK | OK | OK | OK | OK | OK | OK |
| Comparative Example 1 | - | - | - | - | - | - | NG | NG |
| Comparative Example 2 | - | - | - | - | NG | NG | NG | OK |
| Comparative Example 5 | - | - | - | - | - | - | NG | NG |

In Table 2, the "NG" means that a thermal runaway was observed at the exposure temperature, and the "OK" means that a sharp voltage drop was observed without the thermal runaway at the exposure temperature. (-) means that the thermal exposure evaluation was not performed.

The rechargeable lithium battery cells according to Comparative Examples 1 and 2 exhibited the thermal runaway at the penetration speeds of 150 mm/s and 200 mm/s, which indicated deteriorated battery stability.

The rechargeable lithium battery cell of Comparative Example 5 exhibited the thermal runaway at 200 mm/s. It was interpreted that the additive included in the rechargeable lithium battery cell according to Comparative Example 5 had too thin a shell to protect a core material, so that the core and shell materials were mixed at an operating temperature of the cell, resultantly not improving performance and safety.

On the other hand, the rechargeable lithium battery cells of Examples 1 to 3 were confirmed to exhibit no thermal runaway at a low penetration speed of 50 mm/s. Accordingly, the rechargeable lithium battery cells of Examples 1 to 3 exhibited excellent battery stability, compared with the rechargeable lithium battery cells according to the comparative examples.

While this invention has been described in connection with what is presently considered to be practical example embodiments, it is to be understood that the invention is not limited to the disclosed embodiments. On the contrary, it is intended to cover various modifications and equivalent arrangements included within the spirit and scope of the appended claims.

## Claims

1. An additive for a rechargeable lithium battery, comprising
a core, and a shell surrounding the core,
wherein the core includes a flame retardant, a fire extinguishing agent, a non-combustible material, or a combination thereof,
the shell includes a polymer having a melting point of 90 °C to 120 °C.

2. The additive for a rechargeable lithium battery as claimed in claim 1, wherein
a ratio of a thickness of the core to a thickness of the shell is 1:1 to 4:1.

3. The additive for a rechargeable lithium battery as claimed in claim 1, wherein
the core has a thickness of 0.1 µm to 2.0 µm, and the shell has a thickness of 0.025 µm to 0.5 µm.

4. The additive for a rechargeable lithium battery as claimed in claim 1, wherein
the flame retardant includes a phosphoric acid ester compound, a phosphazene compound, or a combination thereof.

5. The additive for a rechargeable lithium battery as claimed in claim 1, wherein
the phosphoric acid ester compound is represented by Chemical Formula 1: 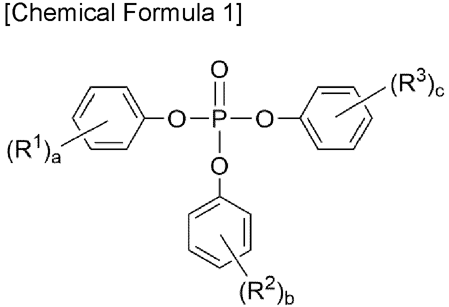 wherein, in Chemical Formula 1,
R¹ to R³ are each independently a substituted or unsubstituted C1 to C10 alkyl group, and
a to c are each independently an integer from 0 to 5.

6. The additive for a rechargeable lithium battery as claimed in claim 1, wherein
the phosphazene compound is represented by Chemical Formula 2: 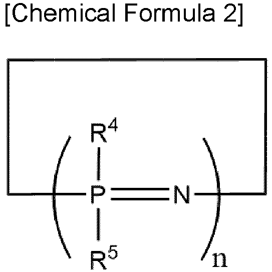 wherein, in Chemical Formula 2,
n is 3 or 4, and
R⁴ and R⁵ are the same or different and are -F, -NR^{x}R^{y}, or a substituted or unsubstituted C1 to C5 alkoxy group, wherein R^{×} and R^{y} are the same or different and are a substituted or unsubstituted C1 to C30 alkyl group, a substituted or unsubstituted C3 to C30 cycloalkyl group, a substituted or unsubstituted C2 to C30 alkenyl group, or C6 to C30 substituted or unsubstituted aryl group.

7. The additive for a rechargeable lithium battery as claimed in claim 1, wherein
the phosphazene compound is represented by Chemical Formula 2-1, or Chemical Formula 2-2: 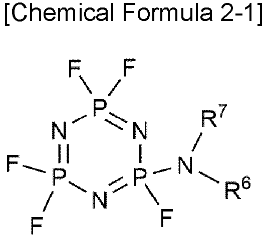 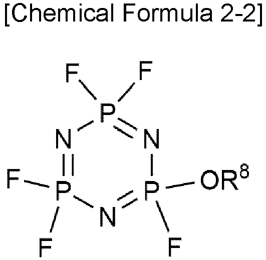 wherein, in Chemical Formula 2-1 and above Chemical Formula 2-2,
R⁶ to R⁸ are each independently hydrogen, a substituted or unsubstituted C1 to C10 alkyl group, a C1 to C10 fluoroalkyl group, or a combination thereof.

8. The additive for a rechargeable lithium battery as claimed in claim 1, wherein
the polymer includes poly(vinylidene fluoride-hexafluoropropylene) (PVDF-HFP), polyacrylic acid, polyethylene, poly(methyl methacrylate), polyalkylene oxide, polyalkylene succinate, or a combination thereof.

9. The additive for a rechargeable lithium battery as claimed in claim 1, wherein
the additive is in a form of fibers formed using electrospinning.

10. An electrolyte for a rechargeable lithium battery, comprising
a non-aqueous organic solvent,
a lithium salt, and
the additive for the rechargeable lithium battery of any one as claimed in claim 1 to claim 9.

11. The electrolyte for a rechargeable lithium battery as claimed in claim 10, wherein
the additive for the rechargeable lithium battery is included in an amount of 0.1 wt% to 20 wt% based on a total weight of the electrolyte for the rechargeable lithium battery.

12. The electrolyte for a rechargeable lithium battery as claimed in claim 10, wherein
the additive for the rechargeable lithium battery is included in an amount of 0.1 wt% to 15 wt% based on a total weight of the electrolyte for the rechargeable lithium battery.

13. The electrolyte for a rechargeable lithium battery as claimed in claim 10, wherein
the additive for the rechargeable lithium battery is included in an amount of 0.1 wt% to 10 wt% based on a total weight of the electrolyte for the rechargeable lithium battery.

14. A rechargeable lithium battery, comprising
a positive electrode including a positive electrode active material;
a negative electrode including a negative electrode active material; and
the electrolyte as claimed in claim 10.
